# EUROPÄISCHE PATENTSCHRIFT

(11) **EP 2 861 462 B1**
(45) Veröffentlichungstag und Bekanntmachung des Hinweises auf die Patenterteilung: **05.05.2021**
(21) Anmeldenummer: 13726721.7
(22) Anmeldetag: 27.05.2013
(51) Int. Cl.: B60Q 3/208, B60Q 3/64, B60J 7/00

(54) **ABDECKVORRICHTUNG MIT EINER LICHTQUELLE**
COVERING DEVICE WITH A LIGHT SOURCE
DISPOSITIF DE RECOUVREMENT COMPRENANT UNE SOURCE DE LUMIÈRE

(30) Priorität: 18.06.2012 FR 1201735
(43) Veröffentlichungstag der Anmeldung: 22.04.2015
(73) Patentinhaber: Webasto SE, 82131 Stockdorf (DE)
(72) Erfinder: ALBERT, Jean-Paul, 79700 Saint Pierre des Echaubrognes (FR)
(74) Vertreter: Epping - Hermann - Fischer
(86) Internationale Anmeldenummer: PCT/EP2013/060883
(87) Internationale Veröffentlichungsnummer: WO 2013/189697

(56) Entgegenhaltungen:
- WO-A1-02/12785
- DE-A1- 10 345 002
- DE-A1- 19 914 427
- DE-A1- 19 936 537
- DE-A1-102009 025 120
- DE-A1-102011 103 319
- FR-A1- 2 905 723
- KR-A-020090 115 543
- US-A- 4 977 487

## Beschreibung

### Technisches Gebiet

Die vorliegende Erfindung bezieht sich auf eine Abdeckvorrichtung mit einer Lichtquelle. Sie findet insbesondere Anwendung auf in ein Kraftfahrzeug integrierte Vorrichtungen.

### Stand der Technik

Die Kraftfahrzeuge sind häufig mit einer Öffnung ausgestattet, die im Autodach ausgebildet ist, wobei die Öffnung durch eine transparente Platte verschlossen ist, um das Licht in das Innere der Fahrgastzelle eindringen zu lassen. Die transparente Platte, beispielsweise aus Glas, kann fest oder beweglich angebracht sein, um zu ermöglichen, die Öffnung zumindest teilweise freizulegen. Für den Benutzer wird auch die Möglichkeit geschaffen, diese Öffnung mit Hilfe einer Abdeckvorrichtung abzudecken.

Eine Abdeckvorrichtung gemäß einem speziellen Typ umfasst eine Aufwickelvorrichtung, auf die eine Bahn aufgewickelt ist. Eine Zugstange ist entlang eines Randes der Bahn parallel zur Achse der Aufwickelvorrichtung befestigt und Spannmittel sind vorgesehen, um die Bahn zwischen der Zugstange und der Aufwickelvorrichtung zu spannen. Die Aufwickelvorrichtung ist unter dem Autodach befestigt, wobei die Achse entlang eines Randes der Öffnung angeordnet ist. Somit kann die Bahn gegenüber der Öffnung angeordnet werden, indem ein Zug auf die Zugstange ausgeübt wird und indem die Bahn von der Aufwickelvorrichtung abgewickelt wird. Ebenso kann die Zugstange an die Aufwickelvorrichtung angenähert werden, um die Bahn aufzuwickeln und die Öffnung freizulegen.

Es ist auch ein anderer Typ von Abdeckvorrichtung bekannt, bei der die Abdeckeinrichtung aus einer oder mehreren starren Klappen hergestellt ist, die gleitend parallel zur Ebene der Öffnung angebracht sind. Das Dokument FR 2 905 723 A1 zeigt ein Beispiel einer derartigen Abdeckvorrichtung.

Es wurde bereits vorgeschlagen, das flexible Dach eines Cabrio-Fahrzeugs mit einem Netz von Lichtleitfasern auszustatten, um eine verteilte Beleuchtung zu verwirklichen und dem Dach im Inneren des Fahrzeugs ein leuchtendes Aussehen zu verleihen.

Eine derartige Ausführung benötigt die Befestigung einer im Allgemeinen starren Lichtquelle an einem flexiblen Element, was Zuverlässigkeitsprobleme aufwirft. Außerdem ist sie auf die Fälle begrenzt, in denen die elektrische Versorgung zur Lichtquelle ausgeführt werden kann, das heißt auf die Fälle, in denen das flexible Element einen an der Karosserie befestigten Teil aufweist. Diese Lösung ist folglich nicht anwendbar, wenn der Träger vollständig beweglich ist, wie es für die vorher erwähnten Abdeckeinrichtungen der Fall ist.

Aus dem Dokument FR 2 964 917 A1 ist auch eine Abdeckvorrichtung bekannt, in deren Schienen ein Lichtwellenleiter angeordnet ist, damit die Schiene eine Beleuchtungsquelle ist. Die Beleuchtung ist jedoch auf die Ränder der Vorrichtung begrenzt.

Die Druckschrift DE 199 36 537 A1 beschreibt eine Rolloanordnung mit Lichtleitfäden, die in oder an einer Abschirmeinrichtung angeordnet sind und die durch eine Lichtquelle mit Licht beaufschlagt werden können.

Die Erfindung zielt darauf ab, eine Abdeckvorrichtung zu liefern, die mindestens eine Lichtquelle integriert und größere Verwendungsmöglichkeiten als der Stand der Technik bietet.

### Beschreibung der Erfindung

Im Hinblick auf diese Ziele sieht die Erfindung eine Abdeckvorrichtung vor, die gegenüber einer Öffnung eines Kraftfahrzeugs befestigt werden soll, wobei die Vorrichtung mindestens ein Element umfasst, das am Umfang der Öffnung befestigbar ist, wobei eine Abdeckeinrichtung in einer Ausbreitungsrichtung zwischen einer Lagerungsposition und einer Abdeckungsposition verlagerbar ist, wobei die Abdeckeinrichtung dazu ausgebildet ist, in der Lagerungsposition von der Öffnung gelöst zu sein und sich in der Abdeckungsposition gegenüber der Öffnung zu erstrecken, und wobei die Abdeckeinrichtung ein Netz von Lichtleitfasern mit seitlicher Lichtstreuung umfasst, wobei das Lichtleitfasernetz durch mindestens eine Lichtquelle mit Licht versorgt wird, die am Element befestigt ist und Enden der Lichtleitfasern des Netzes in mindestens einer Beleuchtungsposition der Abdeckeinrichtung beleuchten kann, um das Netz von Lichtleitfasern mit Licht zu versorgen.

Die Vorrichtung ermöglicht es, die bewegliche Abdeckeinrichtung zu verwenden, um das Licht zu streuen, während die Lichtquelle an einem festen Ort angeordnet ist, an dem ihre Befestigung eine große Zuverlässigkeit aufweisen kann. Es ist nicht erforderlich, eine Lichtquelle an der Abdeckeinrichtung aufzunehmen und auch nicht eine elektrische Versorgung zu dieser vorzusehen. Die Lichtleitfasern weisen eine seitliche Streuung auf, das heißt, dass das Licht auf ihrer ganzen Länge daraus austritt und nicht nur am Ende. Sie ermöglichen eine Beleuchtung auf der ganzen Oberfläche, die von den Lichtleitfasern bedeckt ist, in verteilter Weise. Es kann vorgesehen werden, dass das Netz von Lichtleitfasern eine spezielle Form gestaltet, die sichtbar gemacht wird, wenn die Lichtleitfasern mit Licht versorgt werden, und die dies bei Abwesenheit einer Beleuchtung nicht oder praktisch nicht ist.

Erfindungsgemäß sind die Enden der Lichtleitfasern auf der Höhe mindestens eines Kopfs zusammengefasst, wobei der Kopf gegenüber der Lichtquelle in der Beleuchtungsposition liegt. Somit können zahlreiche Lichtleitfasern mit einer einzigen Lichtquelle versorgt werden. Die Lichtleitfasern sind ausreichend flexibel, damit sie auf der Oberfläche der Abdeckeinrichtung ausgehend vom Kopf verteilt werden.

Erfindungsgemäß ist die Beleuchtungsposition die Abdeckungsposition. Die Beleuchtung wird erhalten, wenn die Abdeckeinrichtung vor der Öffnung ausgebreitet wird und somit vom Inneren des Fahrzeugs weitgehend sichtbar ist.

Erfindungsgemäß ist der Kopf in der Ausbreitungsrichtung orientiert, wobei das Element eine vordere Querstrebe der Vorrichtung ist. Die vordere Querstrebe wird durch einen Rand der Abdeckeinrichtung erreicht, wenn diese gegenüber der Öffnung ausgebreitet wird. Der Kopf verlagert sich direkt in der Richtung der Lichtquelle, um sich schließlich gegenüber dieser zu befinden.

Gemäß Ausführungsformen ist das Element eine Führungsschiene zum Führen der Abdeckeinrichtung in der Ausbreitungsrichtung, wobei die Lichtleitfasern ein Ende entlang eines seitlichen Randes der Abdeckeinrichtung umfassen, damit das Ende durch die Lichtquelle beleuchtet wird. In dieser Konfiguration ist die Lichtquelle durch die Schiene getragen und beleuchtet den Rand der Abdeckeinrichtung, um das Licht zu den Lichtleitfasern zu übertragen. Der Rand der Abdeckeinrichtung bleibt in einem konstanten Abstand von der Lichtquelle.

Gemäß Ausführungsformen umfasst die Vorrichtung mehrere Lichtquellen, die entlang der Schiene verteilt sind. Die Quellen können gleichzeitig funktionieren, aber es ist auch möglich, die Amplitude der Beleuchtung mit der Zeit zu modulieren, um Animationen zu erzeugen. Die Farbe der Lichtquellen kann unterschiedlich sein, sogar ebenfalls moduliert werden.

Gemäß einer konstruktiven Anordnung ist die Lichtquelle ein Lichtwellenleiter, der sich entlang der Schiene erstreckt und das Licht in der Richtung der Abdeckeinrichtung streuen kann. Der Lichtwellenleiter verwendet nur eine einzige Lichtquelle und ermöglicht es, das Licht entlang der ganzen Schiene zu verteilen. Die Enden der Lichtleitfasern müssen nicht zusammengefasst werden und sie können in einer beliebigen Position der Abdeckeinrichtung beleuchtet werden.

Gemäß einer speziellen Anordnung umfasst die Schiene einen Flügel, der sich im Wesentlichen parallel zur Abdeckeinrichtung erstreckt, wobei die Schiene Mittel zur Verblendung zum Schieben der Abdeckeinrichtung gegen den Flügel umfasst. Somit wird wenig Raum zwischen dem Flügel und der Abdeckeinrichtung belassen, um es zu vermeiden, auf diesem Niveau Licht durchzulassen. Es wird vermieden, zu leuchtende Punkte zu erzeugen, die die Insassen des Fahrzeugs stören würden und den Effekt der Beleuchtung durch die Lichtleitfasern überdecken würden.

Insbesondere sind die Verblendungsmittel eine Bürste mit Haaren, die zur Abdeckeinrichtung hin vorstehen, wobei die Abdeckeinrichtung zwischen der Bürste und dem Flügel angeordnet ist. Die Kraft zur Verblendung ist somit leicht mit einer großen Nachgiebigkeit und gestattet das Gleiten der Abdeckeinrichtung an der Bürste durch Implizieren von geringen Reibungskräften.

Gemäß einer konstruktiven Anordnung umfasst die Abdeckeinrichtung eine Gewebebahn, die das Netz von Lichtleitfasern eingliedert. Die Lichtleitfasern werden direkt in die Bahn integriert, beispielsweise beim Weben. Die Lichtleitfasern sind in die Bahn besonders gut integriert. Die Enden der Lichtleitfasern können auf der Höhe des Kopfs herausgezogen oder zusammengefasst sein oder einfach am Rand der Bahn enden.

Gemäß einer Anordnung ist die Bahn in der Lagerungsposition um eine Aufwickelvorrichtung aufgewickelt. Die Lichtleitfasern sind ausreichend flexibel, damit eine Bahn, die sie eingliedert, aufgewickelt werden kann, ob sich die Lichtleitfasern parallel zur Aufwickelachse erstrecken oder nicht.

Gemäß einer Ausführungsform umfasst die Abdeckeinrichtung mindestens eine Klappe, die an der Oberfläche durch das Netz von Lichtleitfasern bedeckt ist. Die Lichtleitfasern können auch an einer starren gleitenden Klappe beispielsweise durch Kleben oder durch Schweißen befestigt sein.

### Kurzbeschreibung der Figuren

Weitere Vorteile, Merkmale und Weiterbildungen ergeben sich aus dem im Folgenden in Zusammenhang mit den Figuren erläuterten Beispielen, in denen:
- Fig. 1 eine perspektivische Ansicht einer Abdeckvorrichtung von oben gemäß einer Ausführungsform der Erfindung darstellt, wobei eine Abdeckeinrichtung sich in der ausgebreiteten Position befindet;
- Fig. 2 eine Ansicht ähnlich zu Fig. 1 ist, wobei sich die Abdeckeinrichtung in der Lagerungsposition befindet;
- Fig. 3 eine Schnittansicht gemäß der Ebene III von Fig. 1 ist, die die Abdeckvorrichtung an der Stelle unter dem Autodach eines Fahrzeugs zeigt;
- Fig. 4 eine Ansicht ähnlich zu Fig. 1 von einer nicht erfindungsgemäßen Ausgestaltung einer Abdeckvorrichtung;
- Fig. 5 eine Schnittansicht gemäß der Ebene V von Fig. 4 ist;
- Fig. 6 eine Ansicht ähnlich zu Fig. 1 von einer nicht erfindungsgemäßen Ausgestaltung einer Abdeckvorrichtung .

### Ausführliche Beschreibung von Ausführungsbeispielen

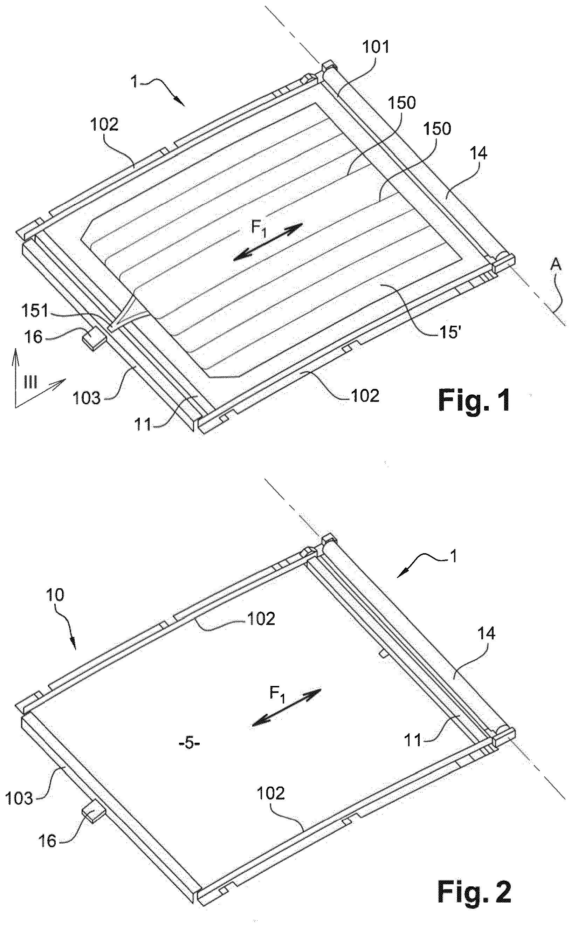

Eine Abdeckvorrichtung 1 gemäß einer Ausführungsform, wie in den Fig. 1 bis 3 gezeigt, umfasst einen Rahmen 10, der unter dem Autodach 4 eines Fahrzeugs gegenüber einer verglasten Öffnung 5 mit beispielsweise einer festen Glasscheibe 6 befestigt werden soll. Die in dieser Beschreibung verwendeten Richtungen beziehen sich auf jene in Bezug auf das Fahrzeug in einer normalen Verwendungsposition. Der Rahmen 10 umfasst zwei seitliche Schienen 102, in denen sich eine Zugstange 11 zwischen einer ausgebreiteten Position, wie in Fig. 1 dargestellt, und einer Lagerungsposition, wie in Fig. 2 dargestellt, verlagert. Die hintere Querstrebe 101 umfasst eine Aufwickelvorrichtung 14, die sich auf der ganzen Länge der hinteren Querstrebe 101 erstreckt. Die Aufwickelvorrichtung 14 ist drehbar um eine Aufwickelvorrichtungsachse A angebracht und eine Bahn 15 wickelt sich auf die Aufwickelvorrichtung 14 auf. Die Bahn 15, die eine Abdeckeinrichtung bildet, ist an einem Ende an der Zugstange 11 und andererseits an der Aufwickelvorrichtung 14 befestigt. Die Zugstange 11 ist zur Achse A der Aufwickelvorrichtung parallel.

Die Aufwickelvorrichtung 14 umfasst klassisch Spannmittel zum Ausüben einer Spannung auf die Bahn 15 in der Richtung ihrer Länge zwischen der Stange 11 und der Aufwickelvorrichtung 14 in einer an sich bekannten und hier nicht detailliert erläuterten Weise.

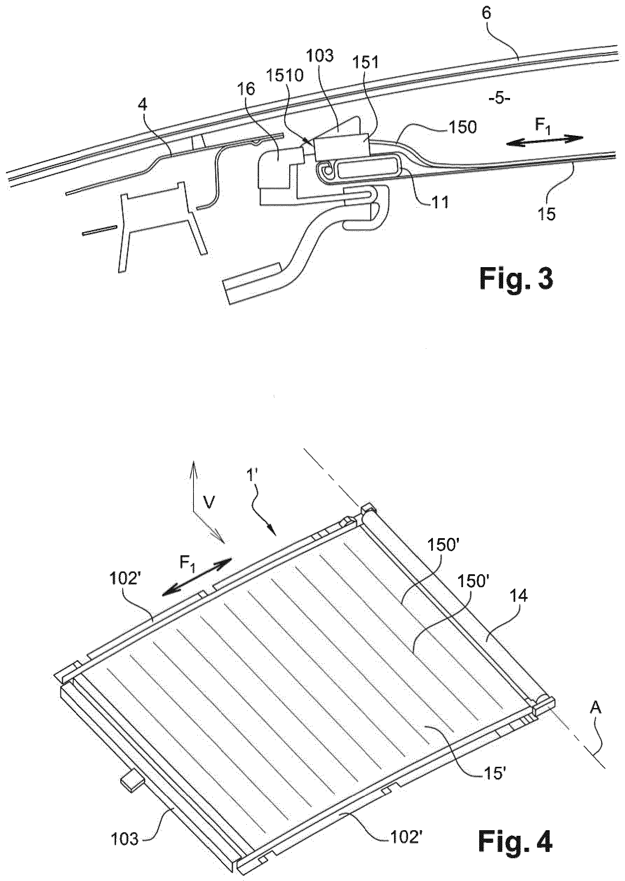

Der Rahmen 10 umfasst eine vordere Querstrebe 103, die die zwei Schienen 102 verbindet, parallel zur hinteren Querstrebe 101 und zu dieser entgegengesetzt. Die vordere Querstrebe 103 weist einen C-förmigen Querschnitt auf, der in der Richtung der hinteren Querstrebe 101 offen ist. Wie Fig. 3 zeigt, fügt sich die Zugstange 11 zwischen die Flügel des C ein, wenn sich die Bahn 15 in der ausgebreiteten Position befindet.

Die Bahn 15 wird unter Eingliederung eines Netzes von Lichtleitfasern 150 gewebt. Die Lichtleitfasern 150 erstrecken sich parallel zur Ausbreitungsrichtung F1. In der Nähe der Zugstange 11 sind die Lichtleitfasern 150 aus der Bahn 15 herausgeführt und die Enden der Fasern 150 sind zusammengefasst und in einen Ring eingespannt, um einen Kopf 151 zu bilden. Der Kopf 151 ist an der Zugstange 11 befestigt. Das Ende der Lichtleitfasern 150 ist an der Stirnfläche bearbeitet, um eine vereinte Oberfläche 1510 darzustellen. Die Lichtleitfasern 150 bestehen beispielsweise aus Kunststoff wie Polycarbonat oder Methylpolymethacrylat und weisen einen Durchmesser in der Größenordnung von 0,25 bis 1 mm auf. Die Bahn 15 umfasst auch andere Fasern, die klassisch für das Weben verwendet werden. Die Dichte des Netzes von Lichtleitfasern 150, seine Abdeckung oder nicht in den anderen Fasern und die Richtung der Lichtleitfasern ermöglichen es, eine unendliche Vielfalt von Entwürfen und des Aussehens der Abdeckeinrichtung 15 zu bestimmen.

Die vordere Querstrebe 103 des Rahmens 10 trägt außerdem eine Lichtquelle 16, die Licht nach hinten in der Ausbreitungsrichtung erzeugen kann. Die Lichtquelle 16 ist derart angeordnet, dass der Kopf 151 und die Lichtquelle 16 einander gegenüber liegen, wenn die Zugstange 11 am nächsten zur vorderen Querstrebe 103 in der ausgebreiteten Position liegt, wie in den Fig. 1 und 3 gezeigt. Die Lichtquelle 16 kann von einem Elektrolumineszenzdioden-, Glühlampen-, Fluoreszenztyp oder jeglichem anderem Typ sein. Sie wird durch das elektrische Netz des Fahrzeugs durch nicht dargestellte Mittel elektrisch versorgt.

Wenn sich die Bahn 15 nicht in der ausgebreiteten Position befindet, wird vermieden, dass die Lichtquelle 16 Licht erzeugt. Es kann gesteuert werden, dass die Lichtquelle 16 dieses erzeugt, wenn sich die Bahn 15 in der ausgebreiteten Position befindet. Das Licht wird dann vom Kopf 151, insbesondere an der vereinten Oberfläche, und folglich von den Enden der Lichtleitfasern 150 empfangen. Das Licht durchläuft die Lichtleitfasern 150 und streut entlang dieser, um den Eindruck zu geben, dass es von allen Zonen der Bahn 15 stammt, in denen die Lichtleitfasern 150 angeordnet sind.

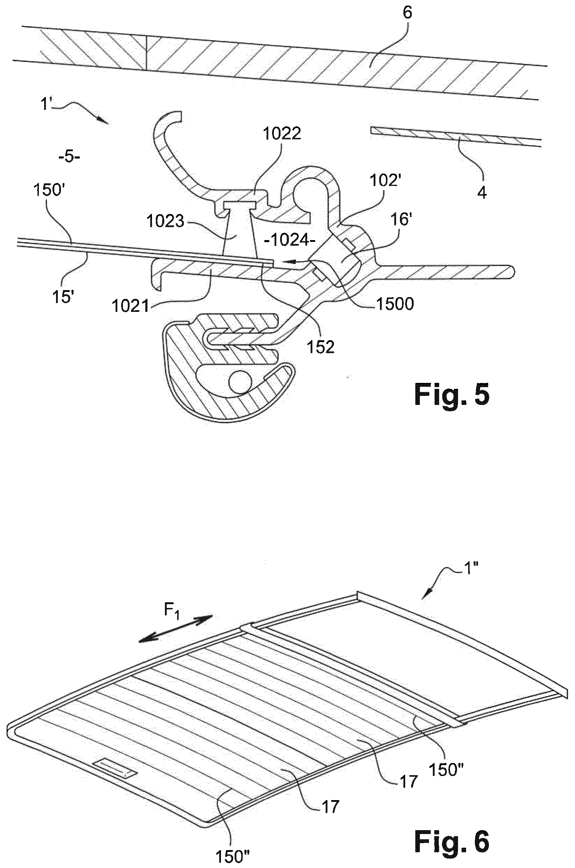

Mit Bezug auf Fig. 4 und 5 umfasst eine Abdeckvorrichtung 1' auch eine Abdeckeinrichtung aus einer Bahn 15'. Die Abdeckvorrichtung 1' zeigt eine nicht erfindungsgemäße Ausgestaltung, die aber nützlich für das Verständnis der Erfindung sein kann. Sie unterscheidet sich von der Ausführungsform darin, dass die Lichtleitfasern 150' parallel zur Aufwickelvorrichtung 14, wie in Fig. 4 gezeigt, auf der ganzen Breite der Bahn 15' angeordnet sind. Die Enden 1500 der Lichtleitfasern 150' sind somit auf den seitlichen Rand 152 der Bahn 15' ausgerichtet. Die Lichtquelle ist nicht an der vorderen Querstrebe angeordnet und die Lichtleitfasern sind nicht an einem Kopf zusammengefasst.

Mit Bezug auf Fig. 5 umfasst die Schiene 102' einen Flügel 1021, der sich im Wesentlichen in der Ebene der Bahn 15' erstreckt. Die Bahn 15' soll sich über dem Flügel 1021 erstrecken. Die Schiene 102' umfasst auch eine obere Wand 1022, die sich gegenüber dem Flügel 1021 erstreckt, so dass die Bahn 15' zwischen dem Flügel 1021 und der oberen Wand 1022 liegt. Die obere Wand 1022 trägt Verblendungsmittel in Form einer Bürste 1023, die sich auf der ganzen Länge der Schiene 102 erstreckt. Die Haare der Bürste 1023 sind zum Flügel 1021 hin orientiert und liegen dort an, so dass, wenn sich die Bahn 15' zwischen der Bürste 1023 und dem Flügel 1021 befindet, sie gegen den Flügel 1021 gepresst wird. Der Rand der Bahn 15' befindet sich somit in einem Beleuchtungsraum 1024, der durch den Flügel 1021, die Bürste 1023 und die obere Wand 1022 begrenzt ist.

Ein Lichtwellenleiter 16' ist in einer Rille aufgenommen und umfasst eine Leuchtfläche, die zum Beleuchtungsraum 1024 hin orientiert ist, um ihn mit Licht zu füllen. Das Licht wird im Beleuchtungsraum 1024 durch das Ende der Lichtleitfasern 150' aufgefangen und anschließend ganz entlang der Lichtleitfasern 150' gestreut.

In einer nicht dargestellten Variante kann der Lichtwellenleiter 16' durch ein Band von Lichtquellen beispielsweise von Elektrolumineszenzdioden ersetzt sein.

Mit Bezug auf Fig. 6 umfasst eine Abdeckvorrichtung 1" zwei gleitende starre Klappen 17, die die Abdeckeinrichtung bilden. Die Abdeckvorrichtung 1" zeigt eine nicht erfindungsgemäße Ausgestaltung, die aber nützlich für das Verständnis der Erfindung sein kann. Die Klappen 17 umfassen an ihrer Unterseite, die zur Fahrgastzelle des Fahrzeugs freiliegt, ein Netz von Lichtleitfasern 150", die in einer Querrichtung angeordnet sind, wie in der Ausgestaltung gemäß den Figuren 4 und 5.

Die seitlichen Ränder der Klappen 17 stehen, wie die Ränder der Bahn 15' der Ausgestaltung gemäß den Figuren 4 und 5, mit einem Beleuchtungsraum 1024 der Schienen 102" in Eingriff. Die Enden der Lichtleitfasern 150" münden in den Beleuchtungsraum 1024.

Somit wird derselbe Effekt wie für die Ausgestaltung gemäß den Figuren 4 und 5 erhalten.

Die Erfindung ist nicht auf die Ausführungsform begrenzt, die gerade als Beispiel beschrieben wurde. Die Ausführungsform könnte auch in eine Abdeckeinrichtung, die aus einer oder mehreren Klappen hergestellt ist, umgesetzt werden.

## Patentansprüche

1. Abdeckvorrichtung, die gegenüber einer Öffnung (5) eines Kraftfahrzeugs fixierbar ist, wobei die Abdeckvorrichtung mindestens ein Element (102, 103) umfasst, das am Umfang der Öffnung (5) befestigbar ist, wobei eine Abdeckeinrichtung (15, 15', 17) in einer Ausbreitungsrichtung zwischen einer Lagerungsposition und einer Abdeckungsposition verlagerbar ist, wobei die Abdeckeinrichtung (15, 15', 17) ausgebildet ist, in der Lagerungsposition von der Öffnung (5) gelöst zu sein und sich in der Abdeckungsposition gegenüber der Öffnung (5) zu erstrecken, wobei die Abdeckeinrichtung (15, 15', 17) ein Netz von Lichtleitfasern (150, 150', 150") mit seitlicher Lichtstreuung umfasst, wobei das Netz von Lichtleitfasern durch mindestens eine Lichtquelle (16, 16') mit Licht versorgt wird, wobei die Lichtquelle (16, 16') am Element (102, 103) befestigt ist und Enden der Lichtleitfasern (150) des Netzes in mindestens einer Beleuchtungsposition, die die Abdeckposition der Abdeckeinrichtung (15, 15', 17) ist, beleuchten kann, um das Netz von Lichtleitfasern (150, 150', 150") mit Licht zu versorgen, **dadurch gekennzeichnet, dass** die Enden der Lichtleitfasern (150) auf der Höhe mindestens eines Kopfs (151) zusammengefasst sind und dieser Kopf (151) der Lichtquelle (16) in der Beleuchtungsposition gegenüberliegt und wobei der Kopf (151) in der Ausbreitungsrichtung orientiert ist und das Element bezogen auf die Ausbreitungsrichtung eine vordere Querstrebe (103) der Abdeckvorrichtung ist.

2. Abdeckvorrichtung nach Anspruch 1, bei der die Abdeckeinrichtung eine Bahn (15, 15') aus Gewebe, die das Netz von Lichtleitfasern (150) eingliedert, umfasst.

3. Abdeckvorrichtung nach Anspruch 2, bei der die Bahn (15, 15') in der Lagerungsposition um eine Aufwickelvorrichtung (14) aufgewickelt ist.

4. Abdeckvorrichtung nach Anspruch 1, bei der die Abdeckeinrichtung mindestens eine Klappe (17) umfasst, die an der Oberfläche durch das Netz von Lichtleitfasern (150") bedeckt ist.

## Claims

1. Covering device which is fixable in relation to an opening (5) of a motor vehicle, wherein the covering device comprises at least one element (102, 103) which is able to be fastened on the circumference of the opening (5), wherein a covering unit (15, 15', 17) can be displaced in an expansion direction between a storage position and a covering position, wherein the covering unit (15, 15', 17) in the storage position is configured so as to be released from the opening (5), and in the covering position is configured so as to extend in relation to the opening (5), wherein the covering unit (15, 15', 17) comprises a network of optical fibres (150, 150', 150'') having lateral light scattering, wherein the network of optical fibres is supplied with light by at least one light source (16, 16'), wherein the light source (16, 16') is fastened to the element (102, 103) and, in order to supply the network of optical fibres (150, 150' 150'') with light, can illuminate ends of the optical fibres (150) of the network in at least one illuminating position which is the covering position of the covering unit (15, 15', 17),
**characterized in that**
the ends of the optical fibres (150) are grouped together at the height level of at least one head (151), and said head (151) of the light source (16) lies opposite the light source (16) in the illuminating position, and wherein the head (151) is oriented in the expansion direction, and the element in terms of the expansion direction is a forward cross member (103) of the covering device.

2. Covering device according to Claim 1, wherein the covering unit comprises a web (15, 15') from woven fabric which integrates the network of optical fibres (150).

3. Covering device according to Claim 2, wherein the web (15, 15') in the storage position is wound up about a winding-up device (14).

4. Covering device according to Claim 1, wherein the covering unit comprises at least one flap (17) which on the surface is covered by the network of optical fibres (150'').

## Revendications

1. Arrangement de recouvrement, qui peut être calé par rapport à une ouverture (5) d'un véhicule automobile, l'arrangement de recouvrement comportant au moins un élément (102, 103) qui peut être fixé au niveau du pourtour de l'ouverture (5), un dispositif de recouvrement (15, 15', 17) pouvant être déplacé dans une direction de propagation entre une position de stockage et une position de recouvrement, le dispositif de recouvrement (15, 15', 17) étant configuré pour, dans la position de stockage, être détaché de l'ouverture (5) et, dans la position de recouvrement, s'étendre par rapport à l'ouverture (5), le dispositif de recouvrement (15, 15', 17) comportant un réseau de fibres optiques (150, 150', 150'') avec diffusion latérale de la lumière, le réseau de fibres optiques étant alimenté en lumière par au moins une source de lumière (16, 16'), la source de lumière (16, 16') étant fixée à l'élément (102, 103) et pouvant éclairer les extrémités des fibres optiques (150) du réseau dans au moins une position d'éclairage, laquelle est la position de recouvrement du dispositif de recouvrement (15, 15', 17), afin d'alimenter le réseau de fibres optiques (150, 150', 150'') avec de la lumière, **caractérisé en ce que** les extrémités des fibres optiques (150) sont regroupées à la hauteur d'au moins une tête (151) et cette tête (151) se trouve en vis-à-vis de la source de lumière (16) dans la position d'éclairage et la tête (151) étant orientée dans la direction de propagation et l'élément étant, en référence à la direction de propagation, une entretoise transversale (103) avant de l'arrangement de recouvrement.

2. Arrangement de recouvrement selon la revendication 1, avec lequel le dispositif de recouvrement comporte une bande (15, 15') de tissu qui intègre le réseau de fibres optiques (150).

3. Arrangement de recouvrement selon la revendication 2, avec lequel la bande (15, 15') dans la position de stockage est enroulée autour d'un arrangement d'enroulement (14).

4. Arrangement de recouvrement selon la revendication 1, avec lequel le dispositif de recouvrement comporte au moins un clapet (17) qui, au niveau de la surface, est recouvert par le réseau de fibres optiques (150").
